# EUROPEAN PATENT SPECIFICATION

(11) **EP 4 274 013 B1**
(45) Date of publication and mention of the grant of the patent: **02.12.2026**
(21) Application number: 22760038.4
(22) Date of filing: 23.02.2022
(51) Int. Cl.: H01M 50/24, B23K 20/10, B23K 33/00

(54) **WATERPROOF BATTERY PACK CASE CONFIGURED SUCH THAT OVER-FUSION THEREOF IS PREVENTED**
WASSERDICHTES BATTERIEPACKGEHÄUSE ZUR VERHINDERUNG VON ÜBERFUSION
BOÎTIER DE BLOC-BATTERIE ÉTANCHE À L'EAU POUR EMPÊCHER UNE SURFUSION

(30) Priority: 25.02.2021 KR 20210025584
(43) Date of publication of application: 08.11.2023
(73) Proprietor: LG Energy Solution, Ltd., Seoul 07335 (KR)
(72) Inventor: JANG, Jae Young, Daejeon 34122 (KR); LEE, Jin Hyun, Daejeon 34122 (KR); KIM, Sang Jin, Daejeon 34122 (KR)
(74) Representative: Plasseraud IP
(86) International application number: PCT/KR2022/002643
(87) International publication number: WO 2022/182122

(56) References cited:
- JP-A- 2002 245 993
- JP-A- 2005 190 852
- JP-A- 2009 181 830
- JP-A- 2011 076 968
- JP-A- 2012 209 174
- JP-A- H11 284 359
- JP-A- H11 297 286
- JP-A- H11 297 286
- KR-B1- 101 409 227
- US-A1- 2012 135 300
- US-A1- 2016 011 029
- US-A1- 2019 375 164

## Description

### [Technical Field]

The present invention relates to a waterproof battery pack case having an over-fusion prevention structure. More particularly, the present invention relates to a battery pack case including an over-fusion prevention and waterproof structure capable of preventing external appearance defects from occurring at a coupling region of the battery pack case due to over-fusion when ultrasonic welding is performed for coupling of the battery pack case while performing a waterproof function.

### [Background Art]

A battery pack constituted by secondary batteries connected to each other in series or in parallel is used as a high-output, high-capacity energy source for medium- or large-sized devices. The battery pack may include a plurality of battery cells, a structure configured to perform electrical connection between the battery cells, a structure configured to control the operation of the battery cells, and a structure configured to adjust heat generation/heat dissipation of the battery cells in a battery pack case, and coupling of the battery pack case is performed in the state in which the structures are received therein to manufacture the battery pack.

The battery pack case is manufactured using a polymer resin. As a coupling method of the battery pack case, there is used a method of pressurizing the polymer resin in a molten state using frictional heat by ultrasonic vibration in order to achieve coupling. If a coupling region of the battery pack case is over-fused or pressing force is inaccurately controlled, the molten resin flows outwards, whereby burrs are generated.

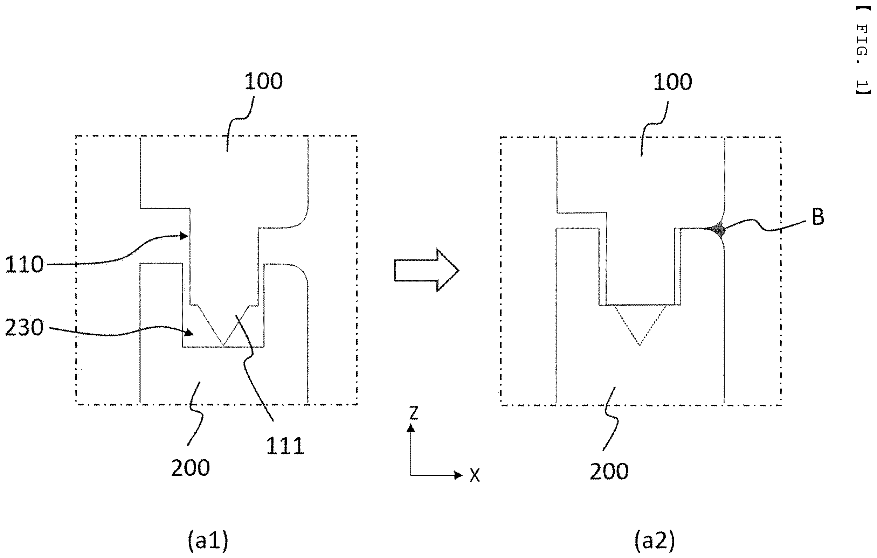

FIG. 1 is a vertical sectional view of a conventional battery pack case coupling region.

Referring to FIG. 1, the battery pack case is constituted by a first case 100 located above and a second case 200 located below. A projecting portion 110 is formed on a coupling region of the first case 100 at a middle part of the first case in a thickness direction (x-axis direction) so as to project downwards therefrom, and a grooved portion 230 is formed in a coupling region of the second case 200 at a middle part of the second case in a thickness direction (x-axis direction) so as to be concave. The projecting portion 110 of the first case 100 is inserted into and fixed to the grooved portion 230 of the second case 200, whereby the battery pack case is assembled.

The projecting portion 110 includes an energy director 111 formed at an end thereof such that the width of the energy director in the thickness direction (x-axis direction) is gradually decreased. When vibration is applied to the first case 100 and/or the second case 200, the energy director 111 is melted in the grooved portion 230 of the second case 200 while being vibrated, whereby the grooved portion 230 is filled with the projecting portion 110 or melted polymer of the energy director 111.

If the first case is excessively pressed against the second case in the state in which the energy director 111 is melted, the energy director may be over-fused, whereby some of the melted energy director may flow out of the case. As a result, burrs B may be generated, as shown in (a2) of FIG. 1.

(a2) of FIG. 1 shows the state in which the burrs B are generated at the coupling regions of the first case 100 and the second case 200 due to over-fusion. In order to prevent generation of defects, such as the burrs, it is important to maintain a uniform distance between the first case and the second case in a height direction at the coupling regions of the first case and the second case.

Patent Document 1 discloses a battery pack including a first case and a second case, wherein a first connection surface of the first case and a second connection surface of the second case are coupled to each other by ultrasonic welding. Patent Document 2 discloses a battery pack configured such that a battery pack case includes a front case and a rear case, a plurality of fusion protrusions made of a resin is formed along an edge of the rear case, i.e. the part of the rear case that contacts the front case, and outflow prevention recesses configured to prevent outflow of the fusion protrusions are formed along an edge of the front case at the region of the front case that contacts the fusion protrusions of the rear case.

Therefore, there is a need for a battery pack case having a structure capable of fundamentally preventing generation of external appearance defects as the result of an energy director of a battery case melted by vibration heat flowing out of the battery case while having a waterproof structure.

Japanese Registered Patent Publication No. 3702090 ("Patent Document 1")
Korean Patent Application Publication No. 2004-0085478 ("Patent Document 2")

Documents US 2012/13500 A1 and JP H11 297286 A relate to battery cases sealed by ultrasonic welding, and documents US 2016/011029 A1 and US 2019/375164 A1 relate to defect formed during welding.

### [Disclosure]

### [Technical Problem]

The present invention has been made in view of the above problems, and it is an object of the present invention to provide a battery pack case including an over-fusion prevention and waterproof structure capable of preventing the occurrence of external appearance defects on a coupling region of the battery pack case due to over-fusion when ultrasonic welding is performed in order to achieve coupling of the battery pack case while performing a waterproof function.

### [Technical Solution]

To that end, the invention relates to a battery pack case according to claim 1.

The battery pack case according to the invention may present one or more of the features of the dependent claims, in any combination allowed by the claims.

The projecting portion may include an energy director disposed at a distal end of the projecting portion, the energy director being configured such that at least a part of the energy director is melted when fusion is performed, and a support portion configured to support the energy director.

The energy director may be configured such that the sectional area of a distal end of the energy director is less than the sectional area of a proximal end of the energy director.

The energy director may be configured to have an inclined structure in which a sectional area of the energy director is gradually decreased toward the distal end of the energy director.

The control rib may have a projecting height equal to or greater than the height of the support portion and less than the height of the distal end of the energy director.

The projecting portion may be continuously formed along the outer periphery of the first case, the receiving portion may be continuously formed along the outer periphery of the second case, the control rib may be continuously or discontinuously formed at an inner surface of the battery pack case with respect to the projecting portion, the outer guide portion may be continuously formed at an outer surface of the battery pack case with respect to the projecting portion, and the flat portion and the outer guide portion may not contact each other while the control rib and the receiving portion may contact each other when the first case and the second case may be coupled to each other.

When the control rib is discontinuously formed, an inner guide portion projecting from the receiving portion so as to face the flat portion may be further formed at the inner surface of the battery pack case with respect to the projecting portion.

The projecting portion may be inserted between the inner guide portion and the outer guide portion of the second case.

The inner guide portion may be provided with a rib recess configured to allow the control rib to be inserted thereinto.

When the first case and the second case are coupled to each other, the projection portion and the outer guide portion may not contact each other.

The wall thickness of the first case and the wall thickness of the second case may be equal to each other.

In addition, the present invention may provide various combinations of the above solving means.

### [Advantageous Effects]

As is apparent from the above description, in a battery pack case according to the present invention, a support structure is formed at coupling regions of a first case and a second case, whereby it is possible to maintain a uniform coupling distance between the first case and the second case even when coupling force is excessively applied to the first case and the second case in the state in which a projecting portion of the first case is melted.

Since the coupling distance between the first case and the second case is maintained uniform, as described above, it is possible to prevent generation of burrs due to over-fusion at the coupling regions of the first case and the second case, whereby it is possible to reduce an external appearance defect rate.

In addition, the first case is completely coupled to the second case by fusion in the state in which the projecting portion of the first case is melted, whereby it is possible to effectively secure airtightness of a battery pack, and therefore it is possible to surely prevent permeation of external moisture into the battery pack.

### [Description of Drawings]

FIG. 1 is a vertical sectional view of a conventional battery pack case coupling region.
FIG. 2 is a perspective view of a first case according to a first embodiment of the present invention.
FIG. 3 is a perspective view of a second case according to a first embodiment of the present invention.
FIG. 4 is a vertical sectional view of a case coupling region during welding according to a first embodiment of the present invention.
FIG. 5 is a vertical sectional view of the case coupling region after welding according to the first embodiment of the present invention.
FIG. 6 is a perspective view of the case coupling region according to the first embodiment of the present invention.
FIG. 7 is a perspective view of a case coupling region according to a second embodiment of the present invention.
FIG. 8 is a perspective view of a case coupling region according to a third embodiment of the present invention.
FIG. 9 is a schematic view showing various shapes of a control rib according to the present invention.

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Hereinafter, embodiments of the present invention will be described in detail with reference to the accompanying drawings.

A battery pack case according to the present invention includes a first case and a second case, which are separated from each other. The first case and the second case have a structure in which the first case and the second case are configured to be coupled to each other by ultrasonic welding

Specifically, a projecting portion is formed on a coupling region of the first case at a middle part of the first case in a thickness direction so as to project therefrom, and a receiving portion is formed in a coupling region of the second case at an inside of the second case in the thickness direction at which the receiving portion is located opposite the projecting portion. Consequently, the projecting portion and the receiving portion may be coupled to each other by fusion in the state in which the projecting portion and the receiving portion face each other.

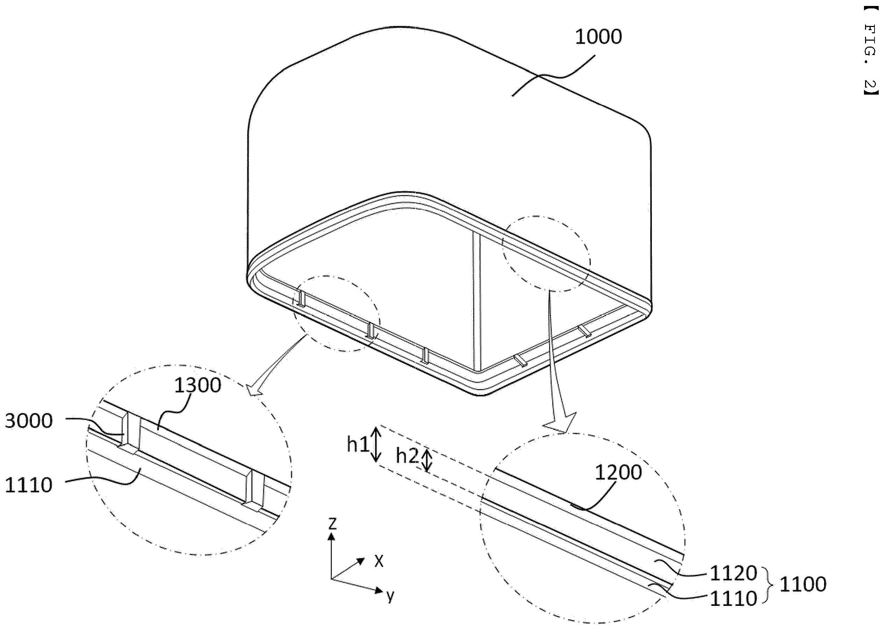

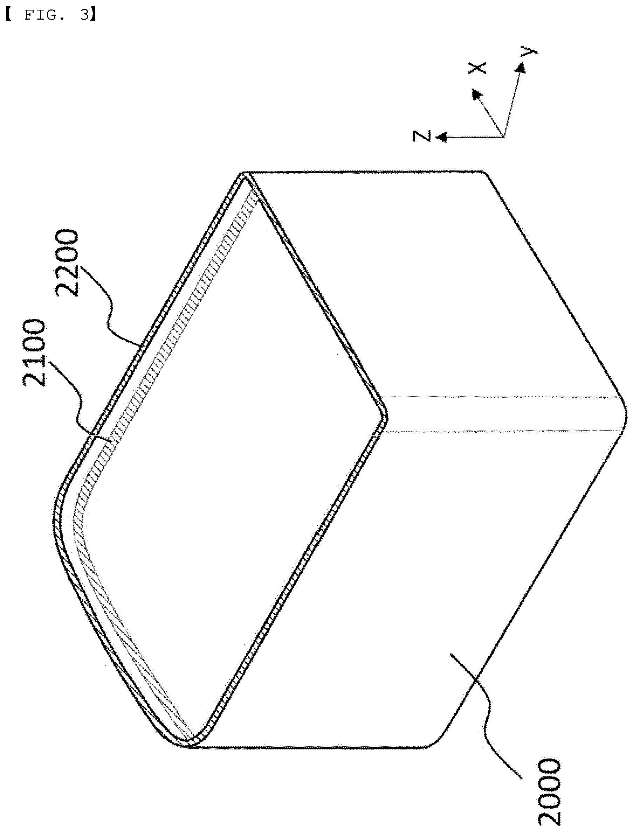

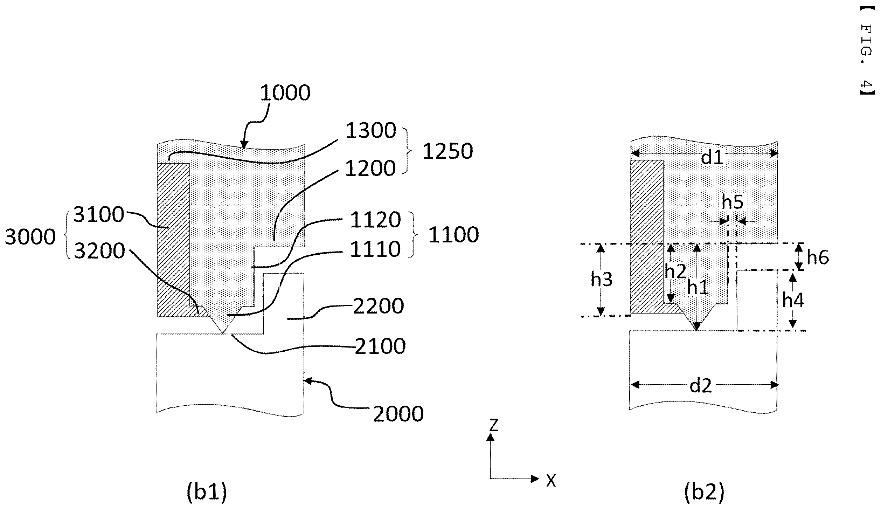

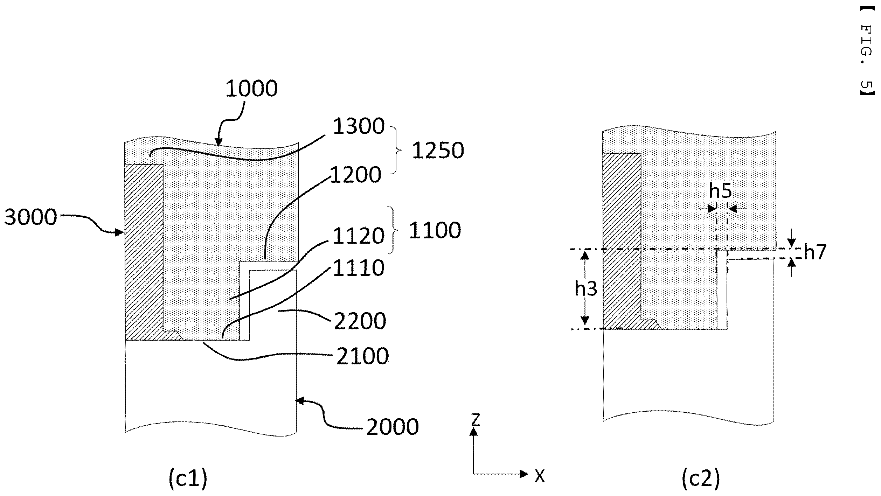

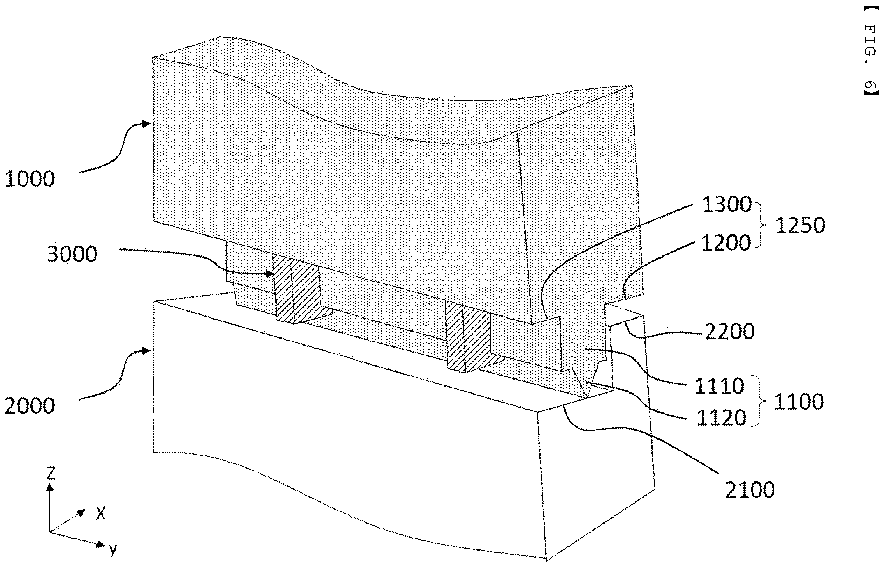

In connection therewith, FIG. 2 is a perspective view of a first case according to a first embodiment of the present invention, FIG. 3 is a perspective view of a second case according to a first embodiment of the present invention, FIG. 4 is a vertical sectional view of a case coupling region during welding according to a first embodiment of the present invention, FIG. 5 is a vertical sectional view of the case coupling region after welding according to the first embodiment of the present invention, and FIG. 6 is a perspective view of the case coupling region according to the first embodiment of the present invention.

Referring to FIGS. 2 and 3, the first case 1000 is configured to have a structure in which a case wall is located at a side surface and an upper surface thereof and a lower surface thereof is open, and the second case 2000 is configured to have a structure in which a case wall is located at a side surface and a lower surface thereof and an upper surface thereof is open. In FIGS. 2 and 3, each of the first case and the second case is shown as having an approximately hexahedral shape. However, it is obvious that the shape of each of the first case and the second case is not limited to the shape shown in the figure as long as the first case and the second case receive a battery module and are coupled to each other to constitute a battery pack.

Here, the coupling region of the first case 1000 is located at an outer periphery thereof, which is a lower surface of the side wall, and includes a projecting portion 1100 formed as the result of a part of the outer periphery of the first case projecting in a downward direction (negative z-axis direction). The projection portion 1100 includes an energy director 1110 and a support portion 1120. At least one control rib 3000 may be located at an inner surface of the projection portion 1100 of the first case 1000 in tight contact therewith.

In addition, the coupling region of the second case 2000 is located at an outer periphery thereof, which is an upper surface of the side wall, and may include a receiving portion 2100 located opposite the projecting portion 1100 of the first case 1000 and an outer guide portion 2200 formed at an outer periphery of the receiving portion 2100 so as to extend upwards (z-axis direction). The horizontal section (xy plane) of the receiving portion 2100 may be formed so as to correspond to the horizontal sections (xy planes) of the support portion 1120 and the control rib 3000.

Hereinafter, the construction of coupling between the first case 1000 and the second case 2000 will be described in detail with reference to FIGS. 4 to 6.

Referring first to FIGS. 4 and 5, in the present invention, the thickness d1 of the first case and the thickness d2 of the second case are equal to each other, the projection portion 1100 formed on the outer periphery of the first case 1000 is in tight contact with the receiving portion 2100 of the second case 2000. When ultrasonic vibration is applied to the first case 1000 and the second case 2000 in this state, the energy director 1110 located at an end of the projecting portion 1100 is melted by frictional heat generated at the part at which the projection portion 1100 of the first case 1000 and the receiving portion 2100 of the second case 2000 abut each other. The first case 1000 and the second case 2000 are coupled to each other by the melted energy director 1110.

The outer periphery of the first case includes a flat portion 11250 and a projecting portion 1100 projecting from a middle of the flat portion 11250 in the thickness direction (x-axis direction). The projecting portion 1100 may include a support portion 1120 having a uniform sectional area in the downward direction (z-axis direction) and an energy director 1110 extending from a lower end of the support portion 1120 and having a gradually decreased sectional area. An outer flat portion 1200 is formed between an outside outer circumferential surface of the support portion 1120 (in a direction toward the outside of the case receiving portion) and an outside outer circumferential surface of the side wall of the first case 1000, and an inner flat portion 1300 is formed between an inside outer circumferential surface of the support portion 1120 (in a direction toward the inside of the case receiving portion) and an inside outer circumferential surface of the side wall of the first case 1000. Here, the outer flat portion 1200 is located opposite the outer guide portion 2200 of the second case 2000.

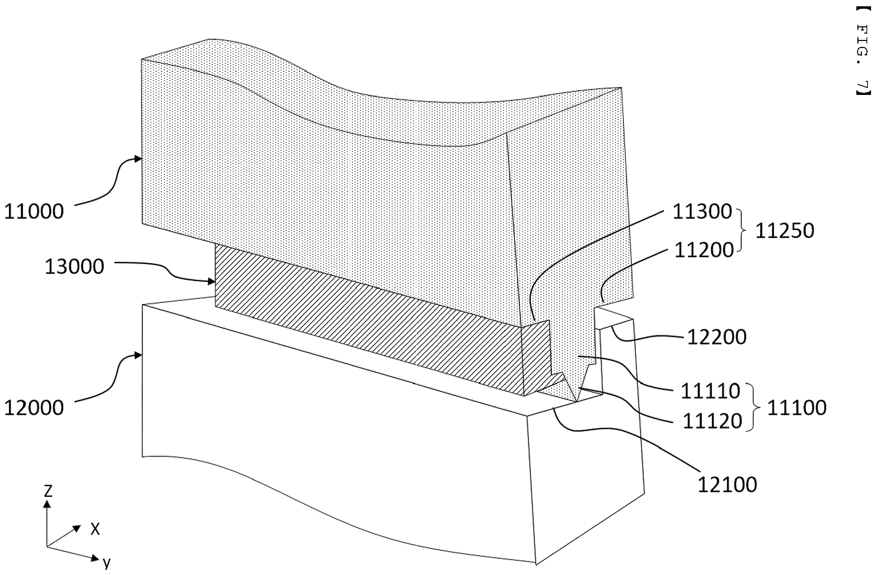

The flat portion 11250 is divided into an outer flat portion 11200 and an inner flat portion 11300, which may have a step therebetween. In FIGS. 4 and 5, the outer flat portion and the inner flat portion are shown as having a step therebetween. In FIGS. 6 and 7, the outer flat portion and the inner flat portion are shown as having no step therebetween.

In addition, the control rib 3000 is located in a state of being coupled to the inner flat portion 1300 and the projecting portion 1100. The control rib 3000 may include a rib support portion 3100 formed along the inside outer circumferential surface of the support portion 1120 and a rib extension portion 3200 formed at a lower part of the rib support portion 3100 so as to extend horizontally (xy plane). The rib extension portion 3200 may be formed so as to extend to a predetermined position between a lower end of the support portion 1120 and a lower distal end of the energy director 1110, and it is preferable for the rib extension portion 3200 to be formed at a position equivalent to 50% to 70% from the lower distal end of the energy director 1110 in the vertical direction (negative z-axis direction). The reason for this is that the lower distal end of the energy director 1110 is melted by ultrasonic vibration, whereby the first case 1000 and the second case 2000 are stably coupled to each other, which is advantageous in reducing case coupling defects due to over-fusion.

It is preferable for a lower end surface of the rib extension portion 3200 to be formed so as to correspond to an upper end surface of the receiving portion 2100 of the second case 2000, and it is more preferable for the lower end surface of the rib extension portion to be formed as a horizontal surface. The reason for this is that the rib extension portion 3200 and the receiving portion 2100 are brought into tight contact with each other in corresponding shapes after completion of case welding, whereby mutual stress is minimized, which is advantageous in stably coupling the first case 1000 and the second case 2000 to each other and is advantageous in preventing deformation of the battery pack case.

Before the first case 1000 and the second case 2000 are thermally fused, a space is formed between the projecting portion 1100 and the outer guide portion 2200, and an outer surface of the support portion 1120 and an inner surface of the outer guide portion 2200 are spaced apart from each other by a predetermined distance h5. In addition, the total height h1 of the projecting portion is greater than the height h4 of the outer guide portion and the height h3 between a lower end surface of the outer flat portion 1200 and the lower end surface of the rib extension portion 3200. The height h3 between the lower end surface of the outer flat portion 1200 and the lower end surface of the rib extension portion 3200 is greater than the height h4 of the outer guide portion. The reason for this is that tight contact between the outer flat portion 1200 and the outer guide portion 2200 is prevented after the first case 1000 and the second case 2000 are coupled to each other by fusion, which is advantageous in preventing case defects due to over-fusion.

After the first case 1000 and the second case 2000 are coupled to each other by fusion, the distance h7 between the lower end surface of the outer flat portion 1200 and an upper end surface of the outer guide portion 2200 may be 0.1 mm to 0.3 mm, preferably 0.2 mm, which is advantageous in preventing over-fusion while minimizing increase in volume of the battery pack case.

As described above, the coupling regions of the first case 1000 and the second case 2000 according to the first embodiment of the present invention are completely coupled to each other by fusion using the energy director 1110 melted by ultrasonic vibration, whereby it is possible to prevent coupling region defects due to over-fusion and to secure airtightness. Consequently, it is possible to prevent permeation of moisture and other liquid materials, and therefore waterproofing is achieved.

FIGS. 4 and 5 show that a step is formed between the inner flat portion 1300 and the outer flat portion 1200, whereby the vertical length of the control rib 3000 (z-axis direction) is greater than h3. However, this is merely an example, and the vertical length of the control rib 3000 (z-axis direction) may be equal to or less than h3 as long as the control rib is capable of performing a supporting function to prevent deformation, such as twisting or bending, of the projecting portion 1100 during a fusion process.

Referring to FIG. 6, the control rib 3000 may have a predetermined width (y-axis direction), and two or more control ribs may be discontinuously disposed on an inner surface of the battery pack case with respect to the projecting portion 1100 while being spaced apart from each other by a predetermined distance. It is preferable for one or more control ribs to be disposed at the side walls of the first case 1000 that face each other so as to be opposite each other. The reason for this is that the balance of the case coupling region is maintained at the time of case coupling by fusion, which is advantageous in effectively performing fusion without over-fusion.

FIG. 7 is a perspective view of a case coupling region according to a second embodiment of the present invention. As shown in FIG. 7, the second embodiment of the present invention is identical to the first embodiment described with reference to FIGS. 2 to 6 except for a control rib 13000. Hereinafter, therefore, only the control rib 13000, which is a different construction, will be described.

In the second embodiment, the control rib 13000 may be continuously located on the inner surface of the case at a projecting portion 11100.

After a first case 11000 and a second case 12000 are coupled to each other by fusion, the entireties of coupling regions of the first case 11000 and a second case 12000 are coupled to each other by fusion due to an energy director 11110 melted by ultrasonic vibration, and defects due to over-fusion are prevented by the control rib 13000, which is disposed on an inside outer circumferential surface of the projecting portion 11100, and a lower end surface of a rib extension portion (not shown) and an upper end surface of a receiving portion 12100 are brought into tight contact with each other, whereby airtightness is improved.

The control rib 13000 supports the entirety of the outer circumferential surface of the projecting portion 11100, whereby it is possible to prevent deformation, such as twisting or bending, of the projecting portion 11100 during a fusion coupling process and to improve stability and durability of the battery pack case.

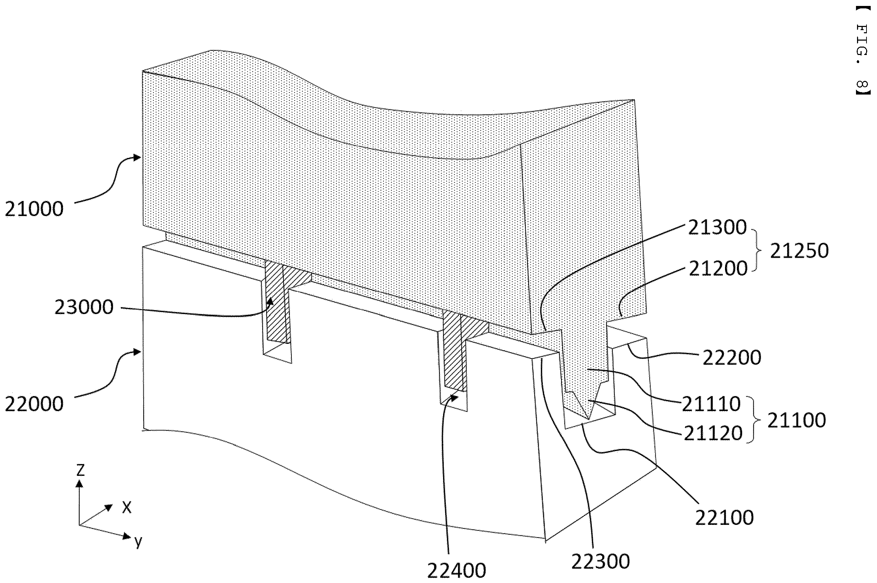

FIG. 8 is a perspective view of a case coupling region according to a third embodiment of the present invention. As shown in FIG. 8, the third embodiment of the present invention is identical to the first embodiment described with reference to FIGS. 2 to 6 except for an inner guide portion 22300 and a rib recess 22400 formed in the inner guide portion 22300. Hereinafter, therefore, only the inner guide portion 22300 and the rib recess 22400, which are different constructions, will be described.

In the third embodiment, an inner guide portion 22300 projecting upwards from a receiving portion 22100 so as to face an inner flat portion 21300 of a first case 21000 may be formed at an inner surface of a second case 22000. The inner guide portion 22300 may be continuously formed at the receiving portion 22100 of the second case 22000. A rib recess 22400 is formed at a position corresponding to a control rib 23000, and the control rib 23000 is located in the rib recess 22400 when the first case 21000 and the second case 22000 are coupled to each other by fusion. After the first case 21000 and the second case 22000 are coupled to each other by fusion, an upper end surface of the inner guide portion 22300 may be brought into tight contact with a lower end surface of the inner flat portion 21300. As a result, the inner guide portion 22300 supports the inner flat portion 21300 in tight contact therewith, which is advantageous in preventing deformation, such as twisting or bending, of the projecting portion 21100 during an ultrasonic welding process and improving stability and durability of the battery pack case.

It is preferable for a bottom surface of the rib recess 22400 to have the same surface (xy plane) as an upper end surface of the receiving portion 22100. The reason for this is that it is possible to more effectively prevent the flow of an energy director 21110 melted by ultrasonic vibration to the rib recess 22400, which is advantageous in improving airtightness of the battery pack case.

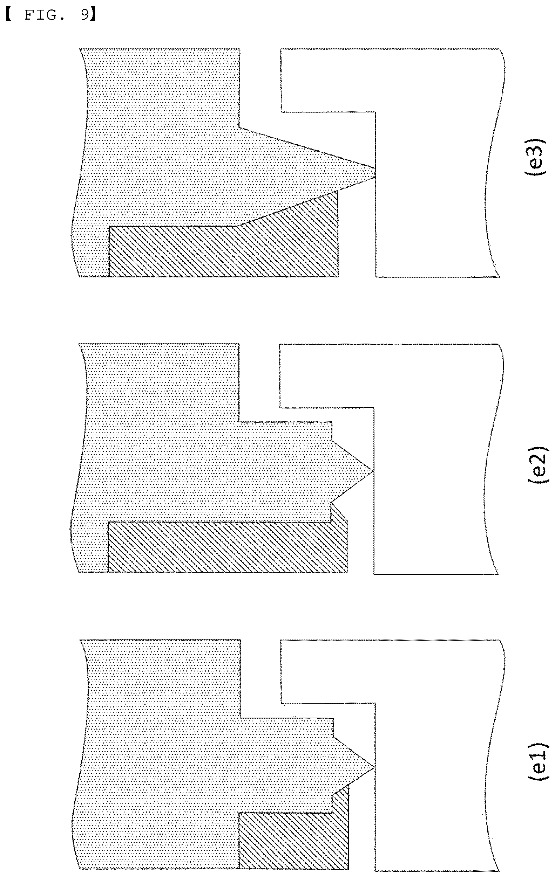

FIG. 9 is a schematic view showing various shapes of the control rib according to the present invention.

As shown in (e1) of FIG. 9, the outer flat portion and the inner flat portion of the first case are formed so as to have the same height, whereby it is possible to easily form the projecting portion, which is advantageous in reducing consumption of the material for the control rib.

As shown in (e2) of FIG. 9, the rib extension portion of the control rib is not horizontal, but a portion of an outer circumferential surface contact portion of the energy director is bent upwards. When the energy director is excessively melted, therefore, the melted energy director is received in a space between the bent surface of the rib extension portion and the receiving portion, and therefore it is possible to prevent the melted energy director from flowing out of the case coupling region.

As shown in (e3) of FIG. 9, the projecting portion has no support portion, the energy director is directly formed on the flat portion of the first case, and the rib extension portion of the control rib is formed so as to has a relatively large size. This construction has advantages in that it is possible to easily form the projecting portion, and the enlarged rib extension portion supports the energy director, whereby it is possible to shorten an ultrasonic welding time while preventing deformation. In addition, a space is provided at the right side of the energy director, whereby it is possible to prevent the excessively melted polymer from flowing to the outside.

The battery pack case according to the present invention may be a case for battery packs that are used as energy sources for various types of devices, wherein a through-hole, through which electrode terminals of battery cells received in the battery pack case are withdrawn outwards, may be formed in the battery pack case.

Alternatively, a structure configured to stably mount the battery pack case in various types of devices, such as a hook structure, may be added to the battery pack case according to the present invention.

### (Description of Reference Symbols)

100, 1000, 11000, 21000: First cases
110, 1100, 11100, 21100: Projecting portions
111, 1110, 11110, 21110: Energy directors
1120, 11120, 21120: Support portions
1200, 11200, 21200: Outer flat portions
1250, 11250, 21250: Flat portions
1300, 11300, 21300: Inner flat portions
200, 2000, 12000, 22000: Second cases
2100, 12100, 22100: Receiving portions
2200, 12200, 22200: Outer guide portions
230: Grooved portion
3000, 13000, 23000: Control ribs
3100: Rib support portion
3200: Rib extension portion
22300: Inner guide portion
22400: Rib recess
B: Burr
d1: Thickness of first case
d2: Thickness of second case
h1: Height of projecting portion
h2: Height of support portion
h3: Height between outer lower end surface of projecting portion and rib extension portion
h4: Height of outer guide portion
h5: Distance between outer surface of support portion and inner surface of outer guide portion
h6: Distance between outer lower end surface of projecting portion and upper end surface of outer guide portion before fusion
h7: Distance between outer lower end surface of projecting portion and upper end surface of outer guide portion after fusion

## Claims

1. A battery pack case comprising:
a first case (1000, 11000, 21000) and a second case (2000, 12000, 22000), wherein outer peripheries of the first case (1000, 11000, 21000) and the second case (2000, 12000, 22000) are configured to be coupled to each other by ultrasonic welding, wherein:
the outer periphery of the first case (1000, 11000, 21000) comprises a flat portion (1250, 11250, 21250) and a projecting portion (1100, 11100, 21100) projecting from a middle of the flat portion (1250, 11250, 21250) in a thickness direction,
the outer periphery of the second case (2000, 12000, 22000) comprises a receiving portion (2100, 12100, 22100) configured to be fused with the projecting portion (1100, 11100, 21100) and an outer guide portion (2200, 12200, 22200) projecting from the receiving portion (2100, 12100, 22100) so as to face the flat portion (1250, 11250, 21250), and
**characterized in that** a control rib (3000, 13000, 23000) projecting from at least a part of the flat portion (1250, 11250, 21250) and coupled to an inner flat portion (1300) of the flat portion (1250, 11250, 21250) and to the projecting portion (1100, 11100, 21100) is provided, the control rib (3000, 13000, 23000) being configured to support the projection portion (1100, 11100, 21100) to prevent deformation during a fusion process.

2. The battery pack case according to claim 1, wherein the projecting portion (1100, 11100, 21100) comprises:
an energy director (1110, 11110, 21100) disposed at a distal end of the projecting portion (1100, 11100, 21100), the energy director (1110, 11110, 21100) being configured such that at least a part of the energy director (1110, 11110, 21100) is melted when fusion is performed; and
a support portion (1120, 11120, 21120) configured to support the energy director (1110, 11110, 21100).

3. The battery pack case according to claim 2, wherein the energy director (1110, 11110, 21100) is configured such that a sectional area of a distal end of the energy director (1110, 11110, 21100) is less than a sectional area of a proximal end of the energy director (1110, 11110, 21100).

4. The battery pack case according to claim 3, wherein the energy director (1110, 11110, 21100) is configured to have an inclined structure in which a sectional area of the energy director (1110, 11110, 21100) is gradually decreased toward the distal end of the energy director (1110, 11110, 21100).

5. The battery pack case according to claim 2, wherein the control rib (3000, 13000, 23000) has a projecting height equal to or greater than a height of the support portion (1120, 11120, 21120) and less than a height of a distal end of the energy director (1110, 11110, 21100).

6. The battery pack case according to claim 1, wherein:
the projecting portion (1100, 11100, 21100) is continuously formed along the outer periphery of the first case (1000, 11000, 21000),
the receiving portion (2100, 12100, 22100) is continuously formed along the outer periphery of the second case (2000, 12000, 22000),
the control rib (3000, 13000, 23000) is continuously or discontinuously formed at an inner surface of the battery pack case with respect to the projecting portion (1100, 11100, 21100),
the outer guide portion (2200, 12200, 22200) is continuously formed at an outer surface of the battery pack case with respect to the projecting portion (1100, 11100, 21100), and
the flat portion (1250, 11250, 21250) and the outer guide portion (2200, 12200, 22200) do not contact each other and the control rib (3000, 13000, 23000) and the receiving portion (2100, 12100, 22100) contact each other when the first case (1000, 11000, 21000) and the second case (2000, 12000, 22000) are coupled to each other.

7. The battery pack case according to claim 6, wherein, when the control rib (3000, 13000, 23000) is discontinuously formed, an inner guide portion (22300) projecting from the receiving portion (2100, 12100, 22100) so as to face the flat portion (1250, 11250, 21250) is further formed at the inner surface of the battery pack case with respect to the projecting portion (1100, 11100, 21100).

8. The battery pack case according to claim 7, wherein the projecting portion (1100, 11100, 21100) is inserted between the inner guide portion (22300) and the outer guide portion (2200, 12200, 22200) of the second case (2000, 12000, 22000).

9. The battery pack case according to claim 7, wherein the inner guide portion (22300) is provided with a rib recess (22400) configured to allow the control rib (3000, 13000, 23000) to be inserted thereinto.

10. The battery pack case according to claim 6, wherein, when the first case (1000, 11000, 21000) and the second case (2000, 12000, 22000) are coupled to each other, the projecting portion (1100, 11100, 21100) and the outer guide portion (2200, 12200, 22200) do not contact each other.

11. The battery pack case according to claim 1, wherein the wall thickness (d1) of the first case (1000, 11000, 21000) and the wall thickness (d2) of the second case (2000, 12000, 22000) are equal to each other.

## Patentansprüche

1. Batteriepackgehäuse, umfassend:
ein erstes Gehäuse (1000, 11000, 21000) und ein zweites Gehäuse (2000, 12000, 22000), wobei äußere Umfangsbereiche des ersten Gehäuses (1000, 11000, 21000) und des zweiten Gehäuses (2000, 12000, 22000) so konfiguriert sind, dass sie durch Ultraschallschweißen miteinander gekoppelt werden, wobei:
der äußere Umfangsbereich des ersten Gehäuses (1000, 11000, 21000) einen flachen Abschnitt (1250, 11250, 21250) und einen vorspringenden Abschnitt (1100, 11100, 21100) umfasst, der von einer Mitte des flachen Abschnitts (1250, 11250, 21250) in einer Dickenrichtung vorspringt,
der äußere Umfangsbereich des zweiten Gehäuses (2000, 12000, 22000) einen Aufnahmeabschnitt (2100, 12100, 22100), der so konfiguriert ist, dass er mit dem vorspringenden Abschnitt (1100, 11100, 21100) verschmolzen wird, und einen äußeren Führungsabschnitt (2200, 12200, 22200) umfasst, der von dem Aufnahmeabschnitt (2100, 12100, 22100) so vorspringt, dass er dem flachen Abschnitt (1250, 11250, 21250) zugewandt ist, und
**dadurch gekennzeichnet, dass** eine Steuerrippe (3000, 13000, 23000) vorgesehen ist, die von zumindest einem Teil des flachen Abschnitts (1250, 11250, 21250) vorspringt und mit einem inneren flachen Abschnitt (1300) des flachen Abschnitts (1250, 11250, 21250) und mit dem vorspringenden Abschnitt (1100, 11100, 21100) gekoppelt ist, wobei die Steuerrippe (3000, 13000, 23000) so konfiguriert ist, dass sie den vorspringenden Abschnitt (1100, 11100, 21100) stützt, um eine Verformung während eines Verschmelzungsprozesses zu verhindern.

2. Batteriepackgehäuse nach Anspruch 1, wobei der vorspringende Abschnitt (1100, 11100, 21100) umfasst:
einen Energierichtungsgeber (1110, 11110, 21100), der an einem distalen Ende des vorspringenden Abschnitts (1100, 11100, 21100) angeordnet ist, wobei der Energierichtungsgeber (1110, 11110, 21100) so konfiguriert ist, dass zumindest ein Teil des Energierichtungsgebers (1110, 11110, 21100) geschmolzen wird, wenn die Verschmelzung durchgeführt wird; und
einen Stützabschnitt (1120, 11120, 21120), der so konfiguriert ist, dass er den Energierichtungsgeber (1110, 11110, 21100) stützt.

3. Batteriepackgehäuse nach Anspruch 2, wobei der Energierichtungsgeber (1110, 11110, 21100) so konfiguriert ist, dass eine Querschnittsfläche eines distalen Endes des Energierichtungsgebers (1110, 11110, 21100) kleiner ist als eine Querschnittsfläche eines proximalen Endes des Energierichtungsgebers (1110, 11110, 21100).

4. Batteriepackgehäuse nach Anspruch 3, wobei der Energierichtungsgeber (1110, 11110, 21100) so konfiguriert ist, dass er eine geneigte Struktur aufweist, in der sich eine Querschnittsfläche des Energierichtungsgebers (1110, 11110, 21100) zum distalen Ende des Energierichtungsgebers (1110, 11110, 21100) hin allmählich verringert.

5. Batteriepackgehäuse nach Anspruch 2, wobei die Steuerrippe (3000, 13000, 23000) eine Vorsprungshöhe aufweist, die gleich oder größer als eine Höhe des Stützabschnitts (1120, 11120, 21120) und kleiner als eine Höhe eines distalen Endes des Energierichtungsgebers (1110, 11110, 21100) ist.

6. Batteriepackgehäuse nach Anspruch 1, wobei:
der vorspringende Abschnitt (1100, 11100, 21100) kontinuierlich entlang des äußeren Umfangsbereichs des ersten Gehäuses (1000, 11000, 21000) ausgebildet ist,
der Aufnahmeabschnitt (2100, 12100, 22100) kontinuierlich entlang des äußeren Umfangsbereichs des zweiten Gehäuses (2000, 12000, 22000) ausgebildet ist,
die Steuerrippe (3000, 13000, 23000) kontinuierlich oder diskontinuierlich an einer Innenfläche des Batteriepackgehäuses in Bezug auf den vorspringenden Abschnitt (1100, 11100, 21100) ausgebildet ist,
der äußere Führungsabschnitt (2200, 12200, 22200) kontinuierlich an einer Außenfläche des Batteriepackgehäuses in Bezug auf den vorspringenden Abschnitt (1100, 11100, 21100) ausgebildet ist, und
der flache Abschnitt (1250, 11250, 21250) und der äußere Führungsabschnitt (2200, 12200, 22200) einander nicht berühren und die Steuerrippe (3000, 13000, 23000) und der Aufnahmeabschnitt (2100, 12100, 22100) einander berühren, wenn das erste Gehäuse (1000, 11000, 21000) und das zweite Gehäuse (2000, 12000, 22000) miteinander gekoppelt sind.

7. Batteriepackgehäuse nach Anspruch 6, wobei, wenn die Steuerrippe (3000, 13000, 23000) diskontinuierlich ausgebildet ist, ferner ein innerer Führungsabschnitt (22300), der von dem Aufnahmeabschnitt (2100, 12100, 22100) so vorspringt, dass er dem flachen Abschnitt (1250, 11250, 21250) zugewandt ist, an der Innenfläche des Batteriepackgehäuses in Bezug auf den vorspringenden Abschnitt (1100, 11100, 21100) ausgebildet ist.

8. Batteriepackgehäuse nach Anspruch 7, wobei der vorspringende Abschnitt (1100, 11100, 21100) zwischen dem inneren Führungsabschnitt (22300) und dem äußeren Führungsabschnitt (2200, 12200, 22200) des zweiten Gehäuses (2000, 12000, 22000) eingefügt ist.

9. Batteriepackgehäuse nach Anspruch 7, wobei der innere Führungsabschnitt (22300) mit einer Rippenaussparung (22400) versehen ist, die so konfiguriert ist, dass die Steuerrippe (3000, 13000, 23000) darin eingefügt werden kann.

10. Batteriepackgehäuse nach Anspruch 6, wobei, wenn das erste Gehäuse (1000, 11000, 21000) und das zweite Gehäuse (2000, 12000, 22000) miteinander gekoppelt sind, der vorspringende Abschnitt (1100, 11100, 21100) und der äußere Führungsabschnitt (2200, 12200, 22200) einander nicht berühren.

11. Batteriepackgehäuse nach Anspruch 1, wobei die Wandstärke (d1) des ersten Gehäuses (1000, 11000, 21000) und die Wandstärke (d2) des zweiten Gehäuses (2000, 12000, 22000) einander gleich sind.

## Revendications

1. Boîtier de bloc-batterie comprenant :
un premier boîtier (1000, 11000, 21000) et un second boîtier (2000, 12000, 22000), dans lequel des périphéries externes du premier boîtier (1000, 11000, 21000) et du second boîtier (2000, 12000, 22000) sont configurées pour être couplées l'une à l'autre par soudage par ultrasons, dans lequel :
la périphérie externe du premier boîtier (1000, 11000, 21000) comprend une partie plate (1250, 11250, 21250) et une portion en saillie (1100, 11100, 21100) faisant saillie depuis un milieu de la partie plate (1250, 11250, 21250) dans une direction d'épaisseur,
la périphérie externe du second boîtier (2000, 12000, 22000) comprend une portion de réception (2100, 12100, 22100) configurée pour être fondue avec la portion en saillie (1100, 11100, 21100) et une portion de guidage externe (2200, 12200, 22200) faisant saillie depuis la portion de réception (2100, 12100, 22100) de manière à faire face à la partie plate (1250, 11250, 21250), et
**caractérisé en ce qu'**une nervure de contrôle (3000, 13000, 23000) faisant saillie depuis au moins une partie de la partie plate (1250, 11250, 21250) et couplée à une portion plate interne (1300) de la partie plate (1250, 11250, 21250) et à la portion en saillie (1100, 11100, 21100) est prévue, la nervure de contrôle (3000, 13000, 23000) étant configurée pour supporter la portion en saillie (1100, 11100, 21100) afin d'empêcher une déformation pendant un processus de fusion.

2. Boîtier de bloc-batterie selon la revendication 1, dans lequel la portion en saillie (1100, 11100, 21100) comprend :
un directeur d'énergie (1110, 11110, 21100) disposé à une extrémité distale de la portion en saillie (1100, 11100, 21100), le directeur d'énergie (1110, 11110, 21100) étant configuré de telle sorte qu'au moins une partie du directeur d'énergie (1110, 11110, 21100) soit fondue lorsque la fusion est effectuée ; et
une portion de support (1120, 11120, 21120) configurée pour supporter le directeur d'énergie (1110, 11110, 21100).

3. Boîtier de bloc-batterie selon la revendication 2, dans lequel le directeur d'énergie (1110, 11110, 21100) est configuré de telle sorte qu'une aire de section transversale d'une extrémité distale du directeur d'énergie (1110, 11110, 21100) soit inférieure à une aire de section transversale d'une extrémité proximale du directeur d'énergie (1110, 11110, 21100).

4. Boîtier de bloc-batterie selon la revendication 3, dans lequel le directeur d'énergie (1110, 11110, 21100) est configuré pour avoir une structure inclinée dans laquelle une aire de section transversale du directeur d'énergie (1110, 11110, 21100) diminue progressivement vers l'extrémité distale du directeur d'énergie (1110, 11110, 21100).

5. Boîtier de bloc-batterie selon la revendication 2, dans lequel la nervure de contrôle (3000, 13000, 23000) a une hauteur de saillie égale ou supérieure à une hauteur de la portion de support (1120, 11120, 21120) et inférieure à une hauteur d'une extrémité distale du directeur d'énergie (1110, 11110, 21100).

6. Boîtier de bloc-batterie selon la revendication 1, dans lequel :
la portion en saillie (1100, 11100, 21100) est formée de manière continue le long de la périphérie externe du premier boîtier (1000, 11000, 21000),
la portion de réception (2100, 12100, 22100) est formée de manière continue le long de la périphérie externe du second boîtier (2000, 12000, 22000),
la nervure de contrôle (3000, 13000, 23000) est formée de manière continue ou discontinue sur une surface interne du boîtier de bloc-batterie par rapport à la portion en saillie (1100, 11100, 21100),
la portion de guidage externe (2200, 12200, 22200) est formée de manière continue sur une surface externe du boîtier de bloc-batterie par rapport à la portion en saillie (1100, 11100, 21100), et
la partie plate (1250, 11250, 21250) et la portion de guidage externe (2200, 12200, 22200) ne viennent pas en contact l'une avec l'autre et la nervure de contrôle (3000, 13000, 23000) et la portion de réception (2100, 12100, 22100) viennent en contact l'une avec l'autre lorsque le premier boîtier (1000, 11000, 21000) et le second boîtier (2000, 12000, 22000) sont couplés l'un à l'autre.

7. Boîtier de bloc-batterie selon la revendication 6, dans lequel, lorsque la nervure de contrôle (3000, 13000, 23000) est formée de manière discontinue, une portion de guidage interne (22300) faisant saillie depuis la portion de réception (2100, 12100, 22100) de manière à faire face à la partie plate (1250, 11250, 21250) est en outre formée sur la surface interne du boîtier de bloc-batterie par rapport à la portion en saillie (1100, 11100, 21100).

8. Boîtier de bloc-batterie selon la revendication 7, dans lequel la portion en saillie (1100, 11100, 21100) est insérée entre la portion de guidage interne (22300) et la portion de guidage externe (2200, 12200, 22200) du second boîtier (2000, 12000, 22000).

9. Boîtier de bloc-batterie selon la revendication 7, dans lequel la portion de guidage interne (22300) est pourvue d'un évidement de nervure (22400) configuré pour permettre à la nervure de contrôle (3000, 13000, 23000) d'y être insérée.

10. Boîtier de bloc-batterie selon la revendication 6, dans lequel, lorsque le premier boîtier (1000, 11000, 21000) et le second boîtier (2000, 12000, 22000) sont couplés l'un à l'autre, la portion en saillie (1100, 11100, 21100) et la portion de guidage externe (2200, 12200, 22200) ne viennent pas en contact l'une avec l'autre.

11. Boîtier de bloc-batterie selon la revendication 1, dans lequel l'épaisseur de paroi (d1) du premier boîtier (1000, 11000, 21000) et l'épaisseur de paroi (d2) du second boîtier (2000, 12000, 22000) sont égales l'une à l'autre.
